# EUROPÄISCHE PATENTSCHRIFT

(11) **EP 1 302 303 B1**
(45) Veröffentlichungstag und Bekanntmachung des Hinweises auf die Patenterteilung: **25.10.2006**
(21) Anmeldenummer: 02020265.1
(22) Anmeldetag: 11.09.2002
(51) Int. Cl.: B29C 69/00, B29C 51/26, B29C 51/00

(54) **Vorrichtung zum Verformen von zwei Platten oder Folienbahnabschnitten in einer Formstation.**
Apparatus for deforming two plates or film web sections in a forming station
Dispositif pour la déformation de deux plaques ou sections d'une bande de film dans une station de formage

(30) Priorität: 29.09.2001 DE 10148398
(43) Veröffentlichungstag der Anmeldung: 16.04.2003
(73) Patentinhaber: ILLIG Maschinenbau GmbH & Co. KG, 74081 Heilbronn (DE)
(72) Erfinder: Schwarzmann, Peter, 74081 Heilbronn (DE)

(56) Entgegenhaltungen:
- DE-A1- 2 952 435
- DE-A1- 3 006 860
- DE-A1- 3 223 171
- DE-C1- 4 416 344
- GB-A- 2 134 033
- US-A- 4 039 643

## Beschreibung

Die Erfindung betrifft eine Vorrichtung nach der Gattung des Hauptanspruches.

Eine gattungsbildende Vorrichtung ist aus dem Gebrauchsmuster DE 93 17 692 U1 bekannt. Den beiden übereinander in starrem Abstand und ortsfest angeordneten Transporteinrichtungen wird jeweils eine Platte von einem Stapelmagazin mittels einer Beschickungseinrichtung übergeben. Beide Stapelmagazine sind in Durchlaufrichtung hintereinander angeordnet. Dies hat den Nachteil, dass die Vorrichtung relativ groß baut. Diese Anordnung -der Plattenmagazine und der zugeordneten Heizungen lässt keine Verarbeitung von Folienbahnabschnitten zu, die von vor die Transporteinrichtung gestellten Folienrollen abgezogen und abgetrennt werden. Ein weiterer Nachteil dieser Vorrichtung besteht darin, dass die beiden Heizstationen einen unterschiedlichen Abstand der Formstation aufweisen, wobei die eine Platte relativ weit entfernt von der Formstation beheizt wird. Der große Transportweg der einen Platte führt zu deren Abkühlung, was insbesondere dann nachteilig ist, wenn in der Heizstation das Fertigheizen der Platten erfolgt. Bedingt durch den geringen Abstand der in den starren Transporteinheiten gehaltenen Platten ist das Einlegen von Teilen zwischen die beiden geformten Formteile vor deren Verschweißen nicht oder nur sehr umständlich möglich. Eine Veränderung der Lage der an beiden Seitenrändem der Platten angreifenden Transporteinrichtung - meist bestehend aus Ketten mit Spitzlaschen - quer zur Durchlaufrichtung ist taktweise nicht möglich. Damit ist kein Ausgleich der Dehnung der erwärmten Platten möglich, sodass sie mehr oder weniger durchhängen, was ihren Weitertransport erschwert.

Aus der DE 44 16 344 C1 ist eine Vorrichtung zum gleichzeitigen Verformen von zwei erwärmten Platten in einer Formstation bekannt. Die eine Platte wird von einer durchgehenden einteiligen Transporteinrichtung von einer seitlichen Heizstation zugeführt, die zweite Platte wird von Hand oder über eine nicht dargestellte zweite Transporteinrichtung unbeheizt der Formstation zugeführt und dort beheizt. Dies muss in diesem Fall von vorne erfolgen und erfordert zum einen großen Platzbedarf und erschwert die Zugänglichkeit der Vorrichtung. Es ist schwierig, auf diese Weise gleich vorbeheizte Platten zu erzielen.

Die GB-A- 2 134 033 beschreibt eine Vorrichtung, mit der mittels einer durchgehenden Transporteinrichtung vorbeheizte Platten von einer seitlichen Heizstation der Formstation einzeln zugeführt werden. Die Entnahme der Platten erfolgt über eine Beschickungseinrichtung aus Magazinen, die seitlich zur Heizstation angeordnet und verschiebbar gestaltet sind. Das Verformen von zwei Platten ist nicht vorgesehen.

Der Erfindung liegt die Aufgabe zugrunde, die Vorrichtung so auszubilden, dass kurze und für beide Platten gleiche Verfahrwege zwischen Heizstation und Formstation gegeben sind, sodass zwei möglichst gleich vorbehandelte Platten in der Formstation verformt werden können. Der Platzbedarf insgesamt sollte verringert werden. Das wahlweise Verarbeiten von zwei eingangsseitig aufgestellten Folienrollen bzw. von einer Folienrolle und einem Plattenstapel sollte bei Bedarf möglich sein. Ferner sollte in Weiterbildung der Erfindung eine Veränderung der die Platten bzw. die Folienbahnabschnitte haltenden Teile der Transporteinrichtung quer zur Transportrichtung möglich sein, um den Durchhang durch die Wärmedehnung kompensieren zu können. Eine Veränderung der Lage der beiden Platten in der Formstation zueinander, in vertikaler Lage betrachtet, sollte möglich sein, was z. B. das Einlegen von Teilen zwischen die beiden geformten Formteile ermöglicht. Durch diese Veränderung der Lage der Platten zueinander sollte die Veränderung der Lage der sich gleichzeitig in der Heizstation befindlichen Platten nicht betroffen sein.

Gelöst ist diese Aufgabe durch die Merkmale des Hauptanspruches. Bedingt durch die Anordnung einer einzigen - oder mehreren - seitlich der Formstation angeordneten Heizstationen und einer Aufteilung der beiden Transporteinrichtungen in jeweils zwei - oder mehrere - getrennte Transporteinheiten ist es möglich, diese Transporteinheiten unterschiedlich zu betreiben. Die beiden der - ggf. ersten - Heizstation zugeordneten Transporteinheiten können quer zur Durchlaufrichtung bis zu je einem Stapelmagazin verschoben werden. Dort nehmen sie eine Platte auf und führen sie - vorzugsweise synchron angetrieben - in die Heizstation. Sie übergeben sie nach einer Fertigbeheizung an die beiden der Formstation zugeordneten Transporteinheiten der Transporteinrichtung bzw. nach einer Vorbeheizung an die Transporteinheiten der zweiten Heizstation. Eine oder beide der Formstation zugeordneten Transporteinheiten sind höhenbeweglich ausgebildet. Damit ist der Abstand der Platten zueinander veränderbar, sowohl zueinander als auch zu den in der Formstation angeordneten beiden Formen zur Formgebung der Formteile. Dies erlaubt verschiedene Verfahrensabläufe bezüglich Vorformen mittels Streckhelfer bzw. automatischem Einlegen von Einlegeteilen zwischen die Formteile.

Ein Ausführungsbeispiel der Erfindung und vorteilhafte Weiterbildungen und Varianten sind anhand der Zeichnungen näher beschrieben. Es zeigen:
- Figur 1: eine Seitenansicht der Vorrichtung.
- Figur 2: eine Draufsicht auf die Vorrichtung.
- Figur 3: einen Querschnitt durch die Formstation.
- Figur 4+5: Draufsicht und Schnitt durch eine Transporteinheit der Transporteinrichtung.
- Figur 6: einen Längsschnitt und
- Figur 7: einen Querschnitt durch den oberen Bereich der Formstation gemäß einer Weiterbildung der Erfindung.
- Figur 8: eine Variante der Vorrichtung mit zwei Heizstationen.

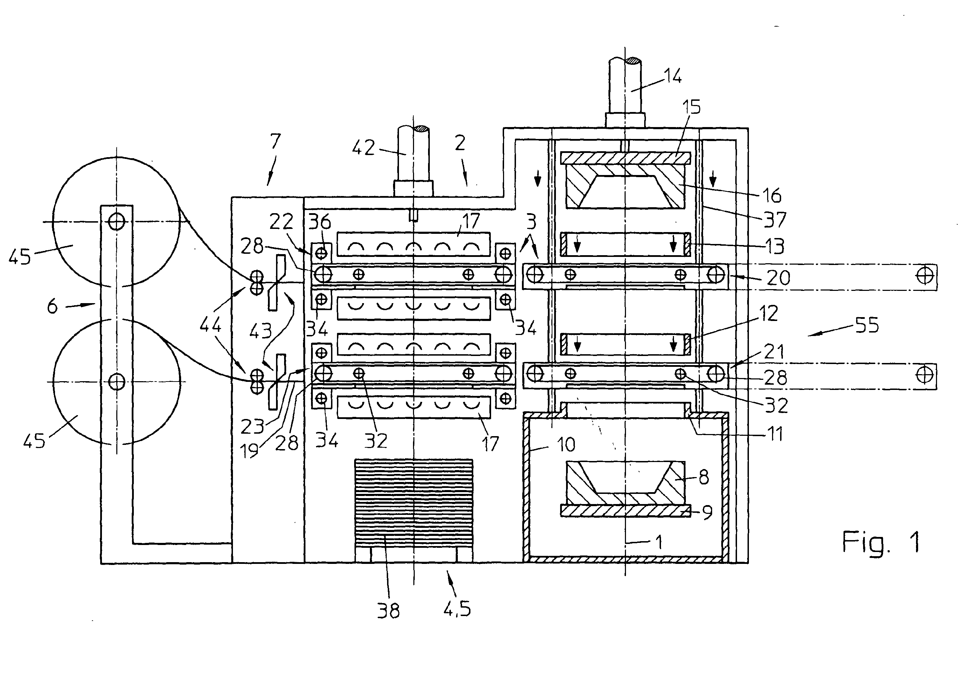

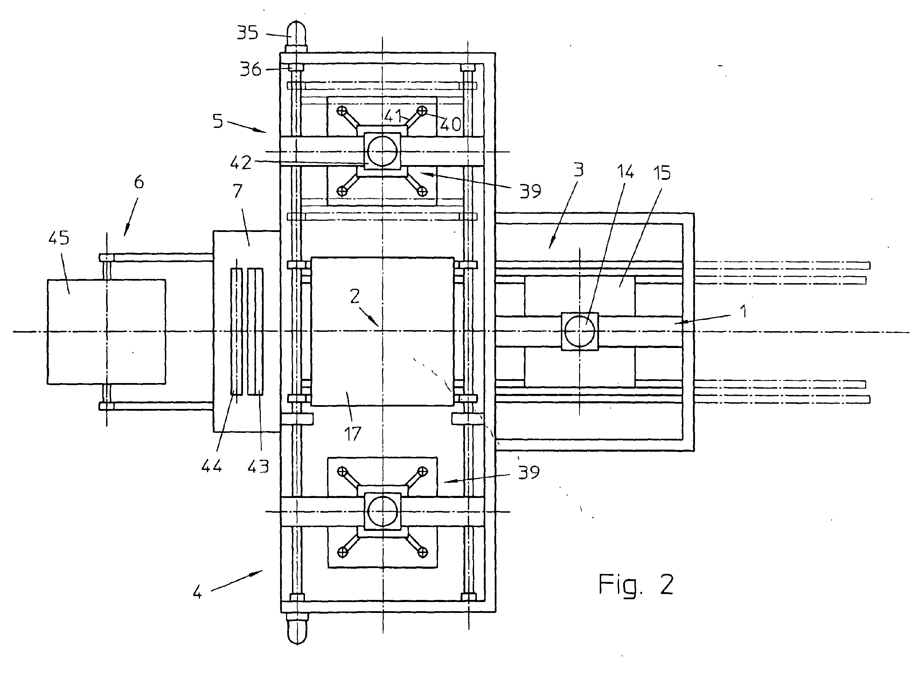

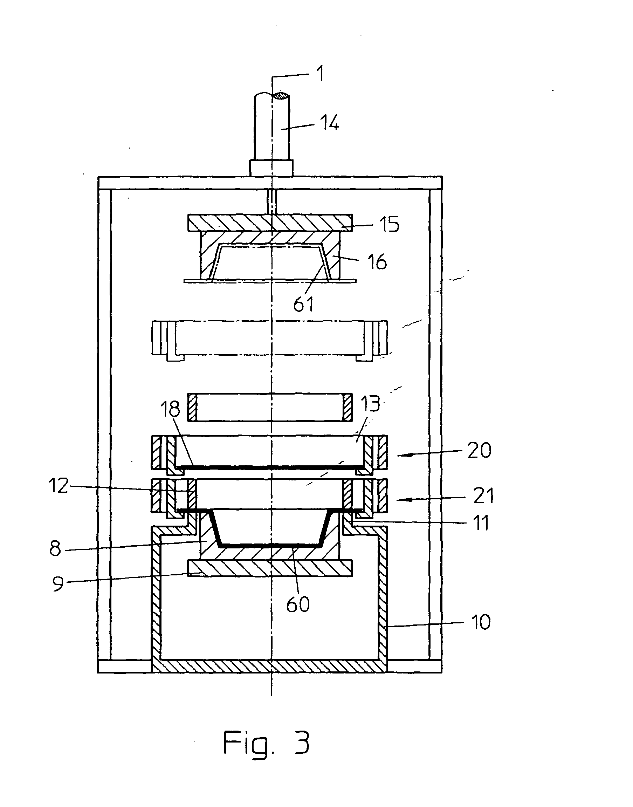

Die Vorrichtung gemäß den Figuren 1 bis 7 besteht aus einer Formstation 1, einer Heizstation 2, einer diese Stationen funktionsmäßig verbindenden Transporteinrichtung 3 sowie wahlweise einem oder zwei Plattenmagazinen 4, 5 und einer Rollenaufnahme 6 mit nachgeschalteter Querschneideeinrichtung 7 zum Aufnehmen von einer oder zwei Folienrollen 45.

In der Formstation 1 sitzt eine untere Tiefziehform 8 auf einem höhenbeweglichen Tisch 9 innerhalb des Blaskastens 10, der an der Oberseite den festen Spannrahmen 11 trägt. Oberhalb davon sind ein höhenbeweglicher Zwischenrahmen 12 und ein höhenbeweglicher Oberrahmen 13 angeordnet, darüber der über den Antrieb 14 vertikal bewegliche Obertisch 15, der die obere Tiefziehform 16 trägt.

In der Heizstation 2 sind vier Heizschirme 17 ortsfest oder horizontal verschiebbar angeordnet zur beiderseitigen Beheizung der beiden zu verformenden Platten 18 bzw. Folienbahnabschnitte 19.

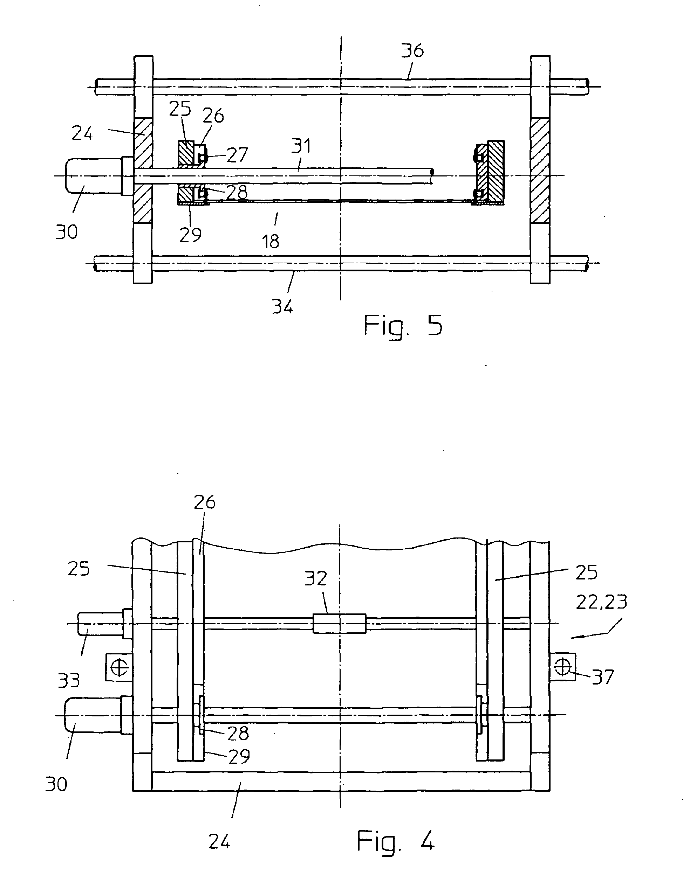

Beide Stationen 1, 2 weisen eine allgemein als Position 3 bezeichnete Transporteinrichtung auf, die die Platten 18 bzw. Folienbahnabschnitte 19 an zwei gegenüberliegenden Seitenrändem erfasst und transportiert. Der zur Formstation 1 zugehörige Teil der Transporteinrichtung 3 besteht aus zwei Transporteinheiten 20, 21. Der zur Heizstation 2 zugehörige Teil der Transporteinrichtung 3 besteht aus zwei Transporteinheiten 22, 23. Der Aufbau einer solchen Transporteinheit 22, 23 ist in den Figuren 4 und 5 näher dargestellt. In einem Halterahmen 24 sitzen zwei zu diesem verschiebbare Halteleisten 25, die Führungsleisten 26 für eine umlaufende Transportkette 27 tragen, die über Kettenräder 28 geführt und umgelenkt ist. An den Halteleisten 25 sitzt je eine Klappleiste 29, die zum Einführen einer Platte 18 weggeschwenkt werden kann. Jeweils ein Kettenrad 28 in jeder Halteleiste 25 wird über den Antrieb 30 und die quer verlaufende Welle 31 taktweise verdreht. Der Querabstand der Halteleisten 25 kann über synchron bewegte Gewindespindeln 32 mit Rechts-/Linksgewinde stufenlos über den Antrieb 33 der Breite der zu verarbeitenden Platte 18 bzw. des Folienbahnabschnittes 19 angepasst werden. Beide Transporteinheiten 22, 23 sind horizontal verschiebbar ausgebildet zwischen der Heizstation 2 und einem der Plattenmagazine 4, 5, die neben der Heizstation 2, in Durchlaufrichtung betrachtet, angeordnet sind. Dazu sitzen die Transporteinheiten 22, 23 an horizontal verlaufenden Führungsstangen 34 und sind mit einem Antrieb 35 über Gewindespindeln 36, die als Kugelrollspindel ausgebildet sein können, verbunden.

Der Aufbau der in der Formstation 1 angeordneten Transporteinheiten 20, 21 ist vergleichbar den Transporteinheiten 22, 23 mit dem Unterschied, dass diese vertikal an Führungen 37 - strichpunktiert in Figur 4 angedeutet - über nicht dargestellte Antriebe verschiebbar ausgebildet sind und die Klappleisten 29 nur einen geringen Öffnungshub ausführen, wenn seitlich eine Platte 18 bzw. ein Folienbahnabschnitt 19 zugeführt wird.

Seitlich der Heizstation 2 sind die beiden Plattenmagazine 4, 5 angeordnet und so ausgebildet, dass sie jeweils einen Stapel 38 von Platten 18 aufnehmen können. Beide Plattenmagazine 4, 5 beinhalten ferner einen Plattenheber 39, bestehend aus einem Sauger 40 tragenden Rahmen 41 und einem Hubantrieb 42 zu dessen Höhenverschiebung.
Eingangsseitig an der Heizstation 2 ist wahlweise eine Rollenaufnahme 6 mit Querschneideeinrichtung 7 angeordnet, wobei diese Rollenaufnahme 6 zur Aufnahme von einer oder wie dargestellt von zwei Folienrollen 45 vorgesehen ist. Entsprechend sind ein oder zwei Messerpaare 43 und ein oder zwei Vorschubwalzenpaare 44 eingebaut.

Die dargestellte Vorrichtung ist variabel in der Gestaltung, was die Anzahl von Plattenmagazinen 4, 5 und Folienrollen 45 anbelangt. So kann die Vorrichtung nur mit zwei Plattenmagazinen 4, 5 ohne Rollenaufnahme 6 betrieben werden. Oder die Vorrichtung arbeitet mit einer der Plattenmagazine 4, 5 und von einer Folienrolle 45, wobei wahlweise die Platte 18 in die obere Transporteinheit 22 oder in die untere Transporteinheit 23 eingelegt wird, der Folienbahnabschnitt 19 entsprechend in die andere Transporteinheit.

Die Vorrichtung kann sogar von zwei Folienrollen 45 aus betrieben werden. Der Grund für das Arbeiten von einer Folienrolle 45 kann darin liegen, dass bei bestimmten Parametern - Folienart, Foliendicke, Stückzahl der herzustellenden Formteile - es nachteilig ist, erst Platten 18 herzustellen zu müssen.

Nachfolgend ist zunächst der Verfahrensablauf beschrieben, wenn die Vorrichtung von zwei Plattenstapeln 38 arbeitet. Die beiden Transporteinheiten 22, 23 werden über jeweils einen Plattenstapel 38 geführt durch entsprechende horizontale Verschiebung. Die Plattenheber 39 entnehmen die jeweils oberste Platte 18 und heben sie auf Höhe Unterkante der Halteleisten 25, woraufhin die beiden Seitenränder durch Einschwenken der Klappleisten 29 festgehalten werden. Danach fahren beide Transporteinheiten 22, 23 in die Heizstation 2, in der die Platten 18 auf Verformungstemperatur beheizt werden. Falls eine zu große Wärmedehnung der Platten 18 eintritt werden die Halteleisten 25 über den Antrieb 33 auseinandergefahren, um einem zu großen Plattendurchhang entgegenzuwirken. Auf gleichen Abstand werden die Halteleisten 25 der Transporteinheiten 20, 21 in der Formstation 1 gebracht. Nach dem Beheizen werden die Transportketten 27 aller vier Transporteinheiten 20, 21, 22, 23 über den jeweiligen Antrieb 30 in Bewegung versetzt, so dass eine Übergabe der Platten 18 an die Transporteinheiten 20, 21 erfolgt. Während die Transporteinheiten 22, 23 die nächsten beiden Platten 18 abholen und diese in der Heizstation 2 erwärmt werden, erfolgt die Verformung der Platten 18 in der Formstation 1 in der Weise, dass die Transporteinheit 21 einen geringen Vertikalhub ausführt, so dass die untere Platte 18 auf dem festen Spannrahmen 11 zu liegen kommt. Zwischenrahmen 12, Transporteinheit 20, Oberrahmen 13 und Tiefziehform 16 fahren nach unten, bis beide Platten 18 fest eingespannt sind und die Verformung beider Platten 18 durch Differenzdruck sowie das linienförmige Verschweißen der beiden Formteile 60, 61 in bekannter Weise erfolgen kann.

Sollen Teile zwischen die beiden Formteile 60, 61 eingelegt werden, ergibt sich ein etwas veränderter Verfahrensablauf in der Weise, dass nach dem Absenken der Transporteinheit 21 und dem Festklemmen der Platte 18 durch den Zwischenrahmen 12 diese verformt wird, so dass von Hand oder automatisch ein Einlegeteil in das untere Formteil 60 eingelegt werden kann. Erst dann bewegen sich Transporteinheit 20, Oberrahmen 13 und Tiefziehform 16 nach unten, um das obere Formteil 61 zu formen und das Verschweißen beider Formteile 60, 61 vorzunehmen.

Werden anstelle von zwei Platten 18 eine Platte 18 und ein Folienbahnabschnitt 19 verarbeitet - was von der oberen oder unteren Folienrolle 45 aus erfolgen kann - bleibt die dem Folienbahnabschnitt 19 zugeordnete Transporteinheit in der Heizstation 2 stehen, die Klappleisten 29 öffnen einen geringen Hub, so dass seitlich über das entsprechende Vorschubrollenpaar 44 ein Folienbahnabschnitt 19 abgezogen werden kann. Nach dem Querschneiden der Folienbahn über das zugeordnete Messerpaar 43 wird der abgetrennte Folienbahnabschnitt 19 über den Antrieb 30 auf die Mitte der Heizstation 2 geführt. In dieser Zeit überführt die andere der Transporteinheiten 22, 23 eine Platte 18 vom Plattenstapel 38 in die Heizstation 2. Die weiteren Abläufe sind identisch der Verarbeitung von zwei Platten 18.

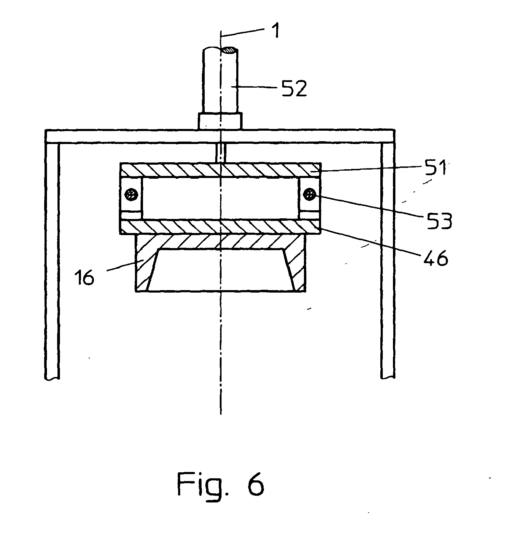

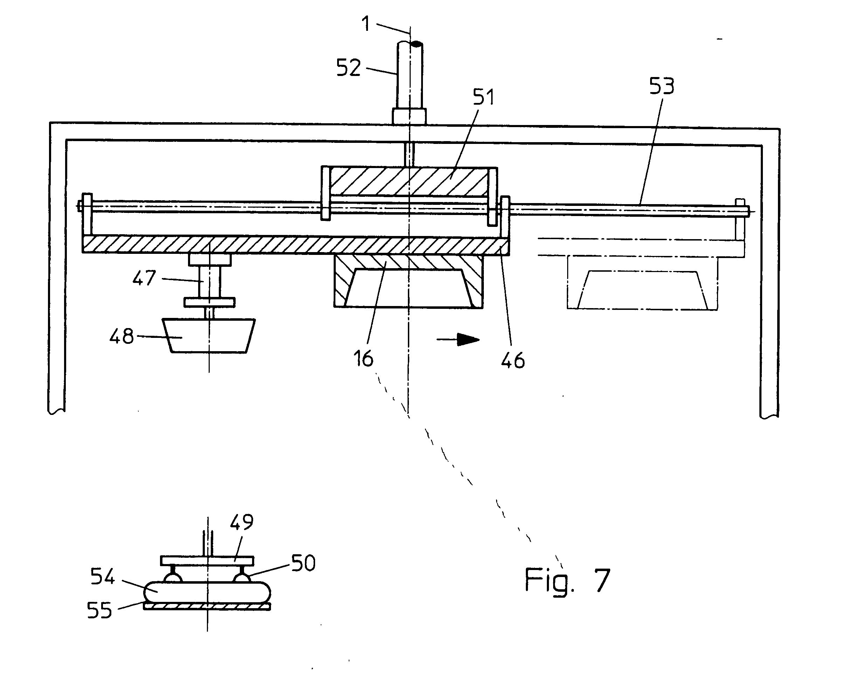

Eine Weiterbildung der Erfindung ist in den Figuren 6 und 7 dargestellt. Anstelle einer über den Obertisch 15 und den Antrieb 14 nur höhenverschiebbare Tiefziehform 16 ist diese zusätzlich horizontal quer zur Durchlaufrichtung der Platten 18 verschiebbar ausgebildet. Sie sitzt auf einer Trägerplatte 46, an der auch ein über den Antrieb 47 höhenverschiebbarer Streckhelfer 48 oder alternativ eine Einlegehilfe 49 mit Saugern 50 sitzt, der zeichnerisch angedeutet ist. In der Formstation 1 ist ein Obertisch 51 höhenverschiebbar über den Antrieb 52 angeordnet. Er trägt Führungen 53, an denen die Trägerplatte 46 geführt und über einen nicht dargestellten Antrieb horizontal verschoben werden kann. Auf diese Weise ist es möglich, wahlweise die obere Tiefziehform 16 oder den Streckhelfer 48 bzw. die Einlegehilfe 49 in die Formstation 1 zu führen.

Bei Einsatz eines Streckhelfers 48 findet nun folgender Verfahrensablauf statt:
Zuerst wird die untere beheizte Platte 18 mit den Transporteinheiten 23, 21 in die Formstation 1 überführt und von Zwischenrahmen 12 und festem Spannrahmen 11 eingespannt. Mit Unterstützung des in die Formstation 1 überführten Streckhelfers 48 erfolgt das Tiefziehen des unteren Formteils 60. Der Streckhelfer 48 fährt aufwärts, die obere Platte 18 wird in die Formstation 1 mit den Transporteinheiten 22, 20 transportiert, eingespannt und mit der in die Formstation 1 überführten oberen Tiefziehform 16 zum Formteil 61 geformt. Beide Formteile 60, 61 werden verschweißt.

Bei Anordnung einer Einlegehilfe 49 anstelle des Streckhelfers 48 erfolgt ebenfalls zunächst das Eintransportieren und Verformen der unteren Platte 18 und danach das automatische Zuführen eines von der Einlegehilfe 49 erfassten Einlegeteils 54 durch Verschiebung der Einlegehilfe 49 in die Formstation 1 und durch ihr Absenken. Einlegeteile 54 können so z. B. von einem Zuführband 55 automatisch abgenommen und in das untere Formteil 60 eingelegt werden, bevor die Zuführung und Verformung des oberen Formteils 61 und das Verschweißen beider Formteile 60, 61 erfolgt.

Eine besonderer Ausbildung der Vorrichtung wird dahingehend vorgeschlagen, die Transporteinheiten 20, 21 in Transportrichtung zu verlängern, wie in Figur 1 strichpunktiert angedeutet, sodass die fertigen Formteile nach einem Wegschwenken des ausgangsseitigen Steges des Zwischenrahmens 11 in die Ausgabestation 55 überführt werden können.

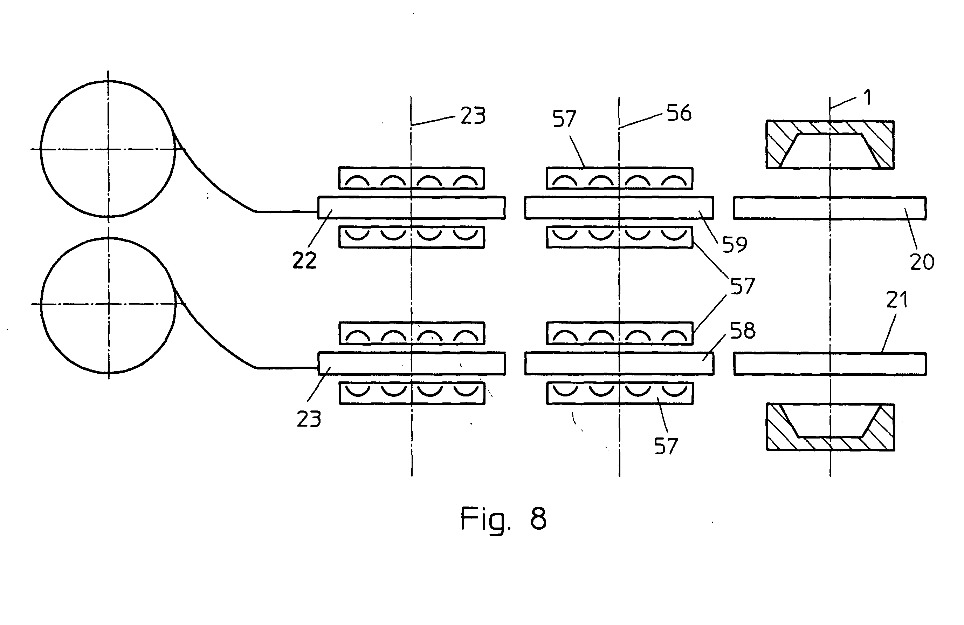

Figur 8 zeigt eine Variante der Vorrichtung in der Weise, dass zwischen der Formstation 1 und der Heizstation 2 eine zweite Heizstation 56 mit Heizungen 57 zwischengeschaltet ist, sodass das Erwärmen der Platten 18 bzw. Folienbahnabschnitte 19 in zwei Stufen erfolgt. In diesem Fall sind dieser Heizstation 56 zwei Transporteinheiten 58, 59 zugeordnet, die vom Aufbau her identisch sein können dem Aufbau der Transporteinheiten 20, 21, 22, 23 jedoch ohne vertikale bzw. horizontale Verschiebeeinrichtung.

Nach dem Vorheizen der Platten 18 bzw. Folienbahnabschnitte 19 in der Heizstation 2 werden diese an die Transporteinheiten 58, 59 übergeben und von den Heizungen 57 fertig beheizt. Dann erfolgt die Übergabe an die Transporteinheiten 20, 21 in der Formstation 1.

In gleicher Weise kann eine weitere Heizstation vorgesehen werden, wobei deren Transporteinheiten mit den Transporteinheiten 58, 59 verbunden sein können.

## Patentansprüche

1. Vorrichtung zum gleichzeitigen Verformen von zwei Platten oder Folienbahnabschnitten aus thermoplastischem Kunststoff und zum anschließenden Verschweißen der beiden geformten Teile, mit einer Formstation (1) mit zwei zueinander verschiebbaren Formen (8, 16), einer seitlich davon angeordneten Heizstation (2) mit mehreren Heizungen (17), zwei übereinander angeordneten Transporteinrichtungen (3) zum Überführen der Platten (18) bzw. der Folienbahnabschnitte (19) von der Heizstation (2) in die Formstation (1), mit einer Rollenaufnahme (6) für eine oder zwei Folienrollen (45) und einer Einrichtung zum Abziehen und Abtrennen von Folienbahnabschnitten (19) und zum Übergeben an die Transporteinrichtung (3) und/oder mit einem oder zwei Stapelmagazinen (4, 5) zum Aufnehmen von Plattenstapeln (38), mit je einem Platenheber (39) zum Überführen der Platten (18) in die zugeordnete Transporteinrichtung (3), **gekennzeichnet durch** folgende Merkmale:
a) die Transporteinrichtung (3) besteht aus zwei Transporteinheiten (20, 21), die im Bereich der Formstation (1) und aus zwei von diesen getrennten, Transporteinheiten (22, 23), die im Bereich der Heizstation (2) angeordnet sind ;
b) das bzw. die Stapelmagazin/e (4) ist/sind seitlich - quer zur Durchlaufrichtung der Platten (18) bzw. der Folienbahnabschnitte (19) betrachtet - neben der Heizstation (2) angeordnet;
c) mindestens eine der im Bereich der Heizstation (2) verlaufenden Transporteinheiten (22, 23) ist quer zur Durchlaufrichtung der Transporteinrichtung (3) zwischen der Heizstation (2) und dem/den Stapelmagazin/en (4) verschiebbar ausgebildet.

2. Vorrichtung nach Anspruch 1, **dadurch gekennzeichnet, dass** zwischen der Formstation (1) und der Heizstation (2) eine weitere Heizstation (56) mit Transporteinheiten (58, 59) vorgesehen ist.

3. Vorrichtung nach Anspruch 1 oder 2, **dadurch gekennzeichnet, dass** die der Formstation (1) zugeordneten Transporteinheiten (20, 21) verlängert sind bis in eine Ausgabestation (55).

4. Vorrichtung nach einem der Ansprüche 1 bis 3, **dadurch gekennzeichnet, dass** die Transporteinheiten (20, 21, 22, 23, 58, 59) aus einem Halterahmen (24) und darin quer zur Durchlaufrichtung verstellbaren Halteleisten (25) für je eine umlaufende Transportkette (27) bestehen.

5. Vorrichtung nach einem der Ansprüche 1 bis 4, **dadurch gekennzeichnet, dass** eine oder beide der in der Formstation (1) angeordneten Transporteinheiten (20, 21) höhenverschiebbar ausgebildet sind.

6. Vorrichtung nach einem der Ansprüche 1 bis 5, **dadurch gekennzeichnet, dass** in der Formstation (1) die obere Tiefziehform (16) quer zur Durchlaufrichtung gemeinsam mit einem höhenverschiebbaren Streckhelfer (48), alternativ. einer Einlegehilfe (49), verschiebbar ausgebildet ist, sodass abwechselnd die obere Tiefziehform (16) bzw. der Streckhelfer (48), alternativ die Einlegehilfe (49), in der Formstation (1) steht.

## Claims

1. A device for simultaneously deforming two plates or sheet sections of thermoplastic polymer and for subsequently welding together the two moulded parts, with a moulding station (1) featuring two moulds (8, 16) that can be displaced relative to one another, with a heating station (2) that is arranged laterally thereof and comprises several heaters (17), with two transport devices (3) that are arranged on top of one another and serve for transferring the plates (18) or sheet sections (19) from the heating station (2) into the moulding station (1), with a roll mounting (6) for one or two sheet rolls (45) and a device for unrolling and separating sheet sections (19) and for transferring said sheet sections to the transport device (3) and/or with one or two stack magazines (4, 5) for accommodating plate stacks (38) that respectively feature a plate lifter (39) for transferring the plates (18) into the assigned transport device (3), **characterized in** the following features:
a) the transport device (3) consists of two transport units (20, 21) that are arranged in the region of the moulding station (1) and of two separate transport units (22, 23) that are arranged in the region of the heating station (2);
b) the stack magazine/s (4) is/are arranged laterally adjacent to the heating station (2)--viewed transverse to the process flow direction of the plates (18) or sheet sections (19);
c) at least one of the transport units (22, 23) extending in the region of the heating station (2) is designed such that it can be displaced between the heating station (2) and the stack magazine/s (4) transverse to the process flow direction of the transport device (3).

2. The device according to claim 1, **characterized in that** another heating station (56) is provided with transport units (58, 59) between the moulding station (1) and the heating station (2).

3. The device according to claim 1 or 2, **characterized in that** the transport units (20, 21) assigned to the moulding station (1) are extended into a delivery station (55).

4. The device according to one of claims 1-3, **characterized in that** the transport units (20, 21, 22, 23, 58, 59) consist of a holding frame (24) and holding rails (25) for one respective revolving transport chain (27), wherein the holding rails can be adjusted in the holding frame transverse to the process flow direction.

5. The device according to one of claims 1-4, **characterized in that** one or both transport units (20, 21) arranged in the moulding station (1) is/are designed in a height-adjustable fashion.

6. The device according to one of claims 1-5, **characterized in that** the upper deep-drawing tool (16) in the moulding station (1) is designed for being displaced transverse to the process flow direction together with a height-adjustable helper (48) or, alternatively, a feeding aid (49) such that the upper deep-drawing tool (16) and the helper (48) or, alternatively, the feeding aid (49) are alternately positioned in the moulding station (1).

## Revendications

1. Dispositif pour la déformation simultanée de deux plaques ou sections de bande de film en matière thermoplastique et pour le soudage consécutif des deux pièces façonnées, avec un poste de façonnage (1) avec deux moules déplaçables l'un par rapport à l'autre (8, 16), un poste de chauffage (2) disposé latéralement de ces derniers, avec plusieurs chauffages (17), deux dispositifs de transport superposés (3) pour transférer les plaques (18) ou les sections de bande de film (19) du poste de chauffage (2) dans le poste de façonnage (1), avec un système de réception de rouleaux (6) pour un ou pour deux rouleaux de film (45) et avec un système pour tirer et détacher des sections de bande de film (19) et pour les transmettre au dispositif de transport (3) et/ou avec un ou plusieurs magasin(s) d'empilage (4, 5) pour y loger des piles de plaques (38), et avec respectivement un preneur de plaques (39) pour transférer les plaques (18) dans le dispositif de transport associé (3), **caractérisé par** les attributs suivants :
a) le dispositif de transport (3) est composé de deux unités de transport (20, 21), disposées dans la zone du poste de façonnage (1) et de deux unités de transport (22, 23) séparées de ces dernières, qui sont disposées dans la zone du poste de chauffage (2) ;
b) le, respectivement les magasin(s) d'empilage (4) est/sont disposé(s) latéralement (considéré à la transversale des plaques (18) ou des sections de bande de film (19)) à côté du poste de chauffage (2) ;
c) au moins l'une des unités de transports (22, 23) s'étendant dans la zone du poste de chauffage (2) est conçue de façon déplaçable à la transversale de la direction de passage du dispositif de transport (3), entre le poste de chauffage (2) et le/les magasin(s) d'empilage (4).

2. Dispositif selon la revendication 1, **caractérisé en ce que** entre le poste de façonnage (1) et le poste de chauffage (2), on a prévu un poste de chauffage supplémentaire (56) avec des unités de transport (58, 59).

3. Dispositif selon la revendication 1 ou 2, **caractérisé en ce que** les unités de transport (20, 21) associées au poste de façonnage (1) sont prolongées jusque dans un poste de distribution (55).

4. Dispositif selon l'une quelconque des revendications 1 à 3, **caractérisé en ce que** les unités de transport (20, 21, 22, 23, 58, 59) sont composées d'un châssis de retenue (24) et de baguettes de retenue (25) réglables dans ce dernier à la transversale de la direction de passage, chacune pour une chaîne de transport (27) tournante.

5. Dispositif selon l'une quelconque des revendications 1 à 4, **caractérisé en ce que** l'une ou les deux des unités de transport (20, 21) disposées dans le poste de façonnage (1) sont conçues de façon déplaçable en hauteur.

6. Dispositif selon l'une quelconque des revendications 1 à 5, **caractérisé en ce que** dans le poste de façonnage (1), le moule d'emboutissage supérieur (16) est conçu de façon déplaçable à la transversale de la direction de passage, en commun avec un auxiliaire d'étirage (48) déplaçable en hauteur, ou alternativement une aide d'insertion (49), pour que de façon alternée, le moule d'emboutissage supérieur (16) ou l'auxiliaire d'étirage (48), ou alternativement l'aide à l'insertion (49) se trouve dans le poste de façonnage (1).
